# EUROPÄISCHE PATENTSCHRIFT

(11) **EP 0 603 626 B1**
(45) Veröffentlichungstag und Bekanntmachung des Hinweises auf die Patenterteilung: **01.10.1997**
(21) Anmeldenummer: 93119649.7
(22) Anmeldetag: 06.12.1993
(51) Int. Cl.: C08K 5/54, C07C 41/46

(54) **Verfahren zur Konditionerung und Stabilisierung von Polyolen**
Method for the conditioning and the stabilisation of polyols
Procédé pour conditionner et stabiliser des polyols

(30) Priorität: 17.12.1992 DE 4242621; 24.12.1992 DE 4244007
(43) Veröffentlichungstag der Anmeldung: 29.06.1994
(73) Patentinhaber: BAYER AG, 51368 Leverkusen (DE)
(72) Erfinder: Scholl, Hans Joachim, Dr., D-51061 Köln (DE); Nefzger, Hartmut, Dr., D-50259 Pulheim (DE); Reiff, Helmut, Dr., D-51375 Leverkusen (DE); Quiring, Bernd, Dr., D-51377 Leverkusen (DE)

(56) Entgegenhaltungen:
- EP-A- 0 508 216
- EP-A- 0 515 933

## Beschreibung

Die Erfindung betrifft ein neues Verfahren zur Konditionierung und Stabilisierung von Polyolen durch Vermischen der Polyole mit bestimmten silylierten Säuren.

Herstellungsbedingte Verunreinigungen wechselnder Art und Menge in Polyolen sind Anlaß für Aktivitätsschwankungen und Farbprobleme, deren Auswirkungen bis in entsprechende Folgeprodukte reichen. Eine Limitierung, d.h. eine Verengung des Spezifikationsrahnens von Polyolen ist ein bedeutsames Ziel zu ihrer verbesserten und damit wirtschaftlicheren Handhabung.

Es war daher die der Erfindung zugrundeliegende Aufgabe, ein neues Verfahren zur Konditionierung und Stabilisierung von Polyolen zur Verfügung zu stellen, welches die angesprochenen Mängel beheben hilft.

Diese Aufgabe konnte mit dem nachstehend näher beschriebenen erfindungsgemäßen Verfahren gelöst werden. Das Prinzip des erfindungsgemäßen Verfahrens besteht darin, den zu behandelnden Polyolen eine geringe Menge von bestimmten, nachstehend näher beschriebenen silylierten Säuren zuzusetzen.

Gegenstand der Erfindung ist ein Verfahren zur Konditionierung und Stabilisierung von Polyolen, dadurch gekennzeichnet, daß man Polyole bei 0 bis 150°C mit 0,0001 bis 1 Gew.-%, bezogen auf die Menge des Polyols, einer silylierten Säure der Formel

X-[Si(CH₃)₃]ₙ

vermischt,
wobei
- X: für den neutralen Säurerest steht, wie er durch Entfernung der aciden Wasserstoffatome aus einer n-basischen Säure mit einem pKa-Wert von maximal 3 erhalten wird, wobei Halogenwasserstoffsäuren ausgenommen sind, und
- n: für eine ganze Zahl von 1 bis 3 steht.

Gegenstand der Erfindung sind auch die nach diesem Verfahren konditionierten Polyole.

Gegenstand der Erfindung ist schließlich auch die Verwendung der so konditionierten Polyole als Ausgangsmaterial bei der Herstellung von Polyurethankunststoffen nach dem Isocyanat-Polyadditionsverfahren.

Als Ausgangsmaterialien für das erfindungsgemäße Verfahren können beliebige Polyole eingesetzt werden. Vorzugsweise wird das erfindungsgemäße Verfahren jedoch zur Konditionierung und Stabilisierung von Polyolen der in der Polyurethanchemie eingesetzten Art verwendet.

Hierzu gehören insbesondere Polyetherpolyole und Polyesterpolyole, beispielsweise beschrieben in Kunststoffhandbuch "Polyurethane", Band 7, herausgegeben von Dr. G. Oertel, S. 42 bis 62 (Verlag Carl Hanser, München 1983).

Es sind Hydroxylgruppen aufweisende Verbindungen, insbesondere 2 bis 8 Hydroxylgruppen aufweisende Verbindungen, speziell solche vom Molekulargewicht 400 bis 6.000, z.B. mindestens 2, in der Regel 2 bis 8, vorzugsweise aber 2 bis 6 Hydroxylgruppen aufweisende Polyether und Polyester bevorzugt.

Zur Durchführung des erfindungsgemäßen Verfahrens werden die Polyole mit insgesamt 0,0001 bis 1,0, vorzugsweise 0,001 bis 0,1 Gew.-%, bezogen auf Polyol, an bestimmten Trimethylsilylgruppen aufweisenden Verbindungen versetzt. Die optimale Menge dieser Verbindungen kann leicht durch einen orientierenden Vorversuch ermittelt werden. Die Zugabe erfolgt innerhalb des Temperaturbereichs von 0 bis 150, vorzugsweise 20 bis 100°C.

Bei den erfindungswesentlichen Zusatzmitteln handelt es sich um silylierte Säuren der Formel

X-[Si(CH₃)₃]ₙ.

In dieser Formel haben X und n die bereits obengenannte Bedeutung. Vorzugsweise steht
- X: für den neutralen Säurerest einer n acide Wasserstoffatome aufweisenden, Sauerstoff enthaltenden Säure eines maximalen pKa-Werts von 2.

Geeignet sind beispielsweise entsprechende silylierte Sulfonsäuren wie Trifluormethansulfonsäuretrimethylsilylester, Nonafluorbutansulfonsäuretrimethylsilylester, Alkylbenzolsulfonsäuretrimethylsilylester oder Methansulfonsäuretrimethylsilylester, silylierte Ester von Säuren des Phosphors wie Phosphorsäuretris(trimethylsilylester) oder Phosphorsäurediethylestertrimethylsilylester.

Die beispielhaft genannten, erfindungswesentlichen Zusatzmittel werden den Polyolen in einer Menge von 0,0001 bis 1,0, vorzugsweise 0,001 bis 0,1 Gew.-%, bezogen auf Polyol, zugesetzt. Ihre optimale Menge kann leicht durch einen orientierenden Vorversuch ermittelt werden. Die Zugabe erfolgt innerhalb des Temperaturbereichs von 0 bis 150, vorzugsweise 20 bis 100°C.

Die erfindungsgemäß konditionierten und stabilisierten Polyole weisen vergleichsweise verringerte Aktivitätsschwankungen auf und enthalten reduzierte Spurenanteile an farbgebenden Verunreinigungen. Dies läßt sich besonders einfach anhand von Folgereaktionen, wie beispielsweise der Herstellung von Polyurethankunststoffen nach dem Isocyanat-Polyadditionsverfahren zeigen.

### Beispiele

### Beispiel 1

Allgemeine Herstellung silylierter Sulfonsäuren

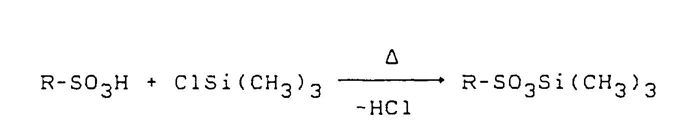

Unter Feuchteausschluß und Stickstoff läßt man bei 30 bis 50°C langsam 2 Äquivalente Trimethylchlorsilan unter Rühren zu 1 Äquivalent Sulfonsäure tropfen. Danach wird bei ca. 80°C solange nachgerührt, bis die HCl-Entwicklung abgeklungen ist. Die silylierte Sulfonsäure wird nachfolgend destillativ gereinigt.

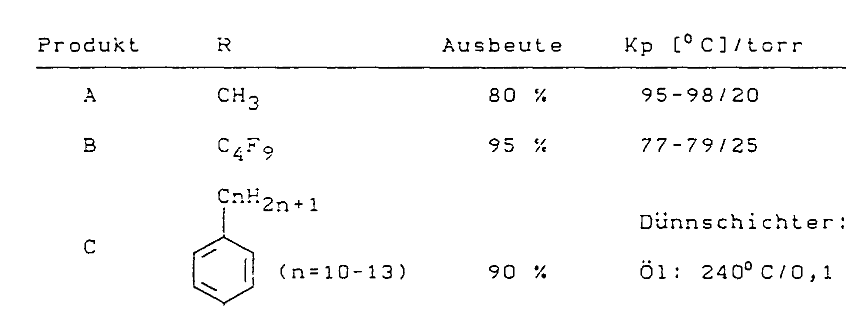

nach ¹H, GC betrug die Reinheit aller Produkte > 95 %.

### Beispiel 2

### Konditionierung von Polyetherpolyolen

In 2 parallelen Ansätzen werden bei 44°C 14,2 g Polyethylenglykol vom mittleren Molekulargewicht 1.500 (Fa. Merck) mit 5,8 g 2,4-Toluylendiisocyanat in 30 g Dimethylacetamid (reinst, redest.) umgesetzt. Der erfindungsgemäße Parallelansatz enthält 500 ppm Trifluormethansulfonsäuretrimethylsilylester(Fa. Fluka, TMS-Triflat) bezogen auf zu bildendes NCO-Prepolymer.

| | | |
|---|---|---|
| TMS-Triflat | 500 ppm | - |
| Exotherm (3 min.) | 50°C | 52°C |
| Farbe | farblos | gelb |
| NCO ber. | 10,0 | 10,0 |
| NCO gef. | 10,0 | 6,7 |
| Festkörper | 40,0 % | 40,0 % |
| Endprodukt | klare, gelbl. | deutlich viskosere |
| 20 min / 50°C | Lösung | gelbe Lösung |
| NCO-Endwert | 9,5 % | 1,0 % |

Erfindungsgemäß erhält man die gewünschte Lösung des NCO-Prepolymeren, während in dem Parallelansatz ohne TMS-Triflat unter Farbvertiefung und Nebenreaktionen (NCO-Verlust) als Endprodukt eine hochviskose Polyurethanlösung vom NCO-Wert 1,0 % erhalten wird.

Das erfindungsgemäße NCO-Prepolymer läßt sich in 80 ml Wasser einwandfrei dispergieren. Der Parallelansatz ohne TMS-Triflat nimmt kein Wasser auf und ist undispergierbar in Wasser.

### Beispiel 3

### Konditionierung von Polyetherpolyolen

In 2 parallelen Ansätzen werden bei 24°C 10 g Polyethylenglykol vom mittleren Molekulargewich 425 (Fa. Riedel de Haen) mit 10 g 2,4-Toluylendiisocyanat in 50 g Dimethylacetamid (reinst, redest.) umgesetzt. Der erfindungsgemäße Parallelansatz enthält 250 ppm TMS-Triflat bezogen auf zu bildendes NCO-Prepolymer.

| | | |
|---|---|---|
| TMS-Triflat | 250 ppm | - |
| Exotherm (3 min.) | 41°C | 43°C |
| Farbe | schwach gelb | gelbbraun |
| NCO ber. | 13,4 | 13,4 |
| NCO gef. | 13,2 | 9,5 |
| Festkörper | 28,6 % | 28,6 % |
| Endprodukt | klare, gelbl. | Gel, vernetzt |
| 10 min / 36°C | Lösung | |

Erfindungsgemäß erhält man die gewünschte Lösung des NCO-Prepolymeren, während in dem Parallelansatz ohne TMS-Triflat unter Farbvertiefung und Nebenreaktionen (NCO-Verlust) als Endprodukt ein vernetztes Polyurethan erhalten wird.

### Beispiel 4 und 5

In 2 parallelen Ansätzen werden bei 40°C 14,2 g Polyethylenglykol vom mittleren Molekulargewich 1.500 (Fa. Merck) mit 5,8 g 2,4-Toluylendiisocyanat in 30 g Dimethylacetamid (reinst, redest.) umgesetzt. Es wurde wie Beispiel 3 verfahren, jedoch nunmehr mit (Beispiel 4) 400 ppm Perfluorbutansulfonsäure-trimethylsilylester, dem Produkt B aus Beispiel 1, bzw. (Beispiel 5) mit 300 ppm Methansulfonsäure-trimethylsilylester, dem Produkt A aus Beispiel 1, stabilisiert. Dazu wurden die Trimethylsilylester dem Ansatz unmittelbar vor der Isocyanatzugabe zugesetzt.

Die Ergebnisse sind in tabellarischer Form zusammengefaßt.

| | Bsp. 4 | Bsp. 5 |
|---|---|---|
| silylierte Säure | 400 ppm | 300 ppm |
| Exotherm (3 min.) | 47°C | 46°C |
| Farbe | farblos | farblos |
| NCO ber. | 10,0 | 10,0 |
| NCO gef. | 9,8 | 9,7 |
| Festkörper | 40,0 % | 40,0 % |
| Endprodukt | klare, gelbl. | klare, gelbl. |
| 20 min / 50°C | Lösung | Lösung |

### Beispiel 6

Zu 5 kg aufgeschmolzenem und entwässertem Poly(ethylenadipat) mit einem zahlenmittleren Molekulargewicht von 2.000 g/mol (OH-Zahl 56) werden bei ca. 50 bis 60°C 0,5 g n-Alkylbenzolsulfonsäuretrimethylsilylester, dem Produkt C aus Beispiel 1, unter Rühren zugegeben. Das so konditionierte Poly(ethylenadipat) weist eine Konzentration von 100 ppm Silylverbindung auf. Das Material wird in zwei Chargen geteilt, wovon eine bei Raumtemperatur, die andere bei 50 bis 60°C gelagert wird. In bestimmten Zeitabständen (1, 3, 7 und 14 Tage) wird aus jeder der beiden Chargen ein Anteil entnommen und durch Umsetzung mit 1,5-Napthylendiisocyanat (NDI) ein Semipräpolymer (100 Tle. Poly(ethylenadipat), 24 Tle. NDI) hergestellt, welches seinerseits auf 90°C abgekühlt und bei dieser Temperatur gelagert wird. Nach 1 Stunde sowie nach 24 Stunden (Doppelbestimmung) wird mittels eines Haake-Spindelviskosimeters die Viskosität bestimmt. Die Ergebnisse sind in Tabelle 1 dargestellt.

**Tabelle 1:**

| | Lagerung bei °C | Zeit Tage | Menge ppm | η/mPas^{90°C} 1 Std. | η/mPas^{90°C} 24 Std. |
|---|---|---|---|---|---|
| (a) | 23 | 1 | 100 | 2000 | 4400 |
| | | | | | 4500 |
| | 23 | 3 | 100 | 1900 | 4400 |
| | | | | | 4400 |
| | 23 | 7 | 100 | 2400 | 5200 |
| | | | | | 5400 |
| | 23 | 14 | 100 | 2200 | 4400 |
| | | | | | 4400 |
| | | | | | |
| (b) | 50 | 1 | 100 | 1900 | 4500 |
| | | | | | 4600 |
| | 50 | 3 | 100 | 2800 | 4500 |
| | | | | | 4400 |
| | 50 | 7 | 100 | 2900 | 5400 |
| | | | | | 5400 |
| | 50 | 14 | 100 | 2700 | 5200 |
| | | | | | 5400 |

| Vergleichsbeispiel: | | | | | |
|---|---|---|---|---|---|
| (c) | 23 | - | - | 3300 | geliert |

### Beispiel 7

Zu 5 kg aufgeschmolzenem und entwässertem Poly(ethylenadipat) mit einem zahlenmittleren Molekulargewicht von 2.000 g/mol (OH-Zahl 56) werden bei ca. 50 bis 60°C 0,25 g Trifluormethansulfonsäuretrimethylsilylester (TMS-triflat) eingerührt. Wie in Beispiel 6 beschrieben, wird aus dem so konditionierten Poly(ethylenadipat) ein NCO-Semipräpolymer hergestellt und hinsichtlich seiner Viskosität untersucht. Die Ergebnisse sind in Tabelle 2 dargestellt.

**Tabelle 2:**

| | Menge ppm | η/mPas^{90°C} 1 Std. | η/mPas^{90°C} 24 Std. |
|---|---|---|---|
| (a) | 50 | 2100 | 5100 |
| | | | 5400 |

| Vergleichsbeispiel: | | | |
|---|---|---|---|
| (b) | - | 3300 | geliert |

### Beispiel 8

Zu 5 kg aufgeschmolzenem und entwässertem Poly(ethylenadipat) mit einem zahlenmittleren Molekulargewicht von 2.000 g/mol (OH-Zahl 56) werden bei ca. 130°C 10,7 g eines frisch hergestellten Gemisches, bestehend aus 97,9 Teilen Poly(ethylenadipat) und 2,1 Teilen Trifluormethansulfonsäuretrimethylsilylester(TMS-triflat) eingerührt. Umittelbar anschließend wird die so konditionierte Polyol-Komponente durch Zugabe von 1,5-Naphthylendiisocyanat (NDI) (100 Teile Poly(ethylenadipat), 24 Teile NDI) zu einem Semipräpolymeren umgesetzt, welches nach beendeter Reaktion rasch auf 90°C abgekühlt wird. Die Ergebnisse sind in Tabelle 3 dargestellt.

**Tabelle 3:**

| | Menge ppm | η/mPas^{90°C} 1 Std. | η/mpas^{90°C} 24 Std. |
|---|---|---|---|
| (a) | 50 | 2100 | 6200 |
| | | | 6200 |

| Vergleichsbeispiel: | | | |
|---|---|---|---|
| (b) | - | 3300 | geliert |

## Patentansprüche

1. Verfahren zur Konditionierung und Stabilisierung von Polyolen, dadurch gekennzeichnet, daß man Polyole vor der Umsetzung mit isocyanaten bei 0 bis 150°C mit 0,0001 bis 1 Gew.-%, bezogen auf die Menge des Polyols, einer silylierten Säure der Formel
X-[Si(CH₃)₃]ₙ
vermischt,
wobei
X für den neutralen Säurerest steht, wie er durch Entfernung der aciden Wasserstoffatome aus einer n-basischen Säure mit einem pKa-Wert von maximal 3 erhalten wird, wobei Halogenwasserstoffsäuren ausgenommen sind, und
n für eine ganze Zahl von 1 bis 3 steht.

2. Verfahren gemäß Anspruch 1, dadurch gekennzeichnet, daß man als silylierte Säuren der in Anspruch 1 genannten Formel O-silylierte, Sauerstoff enthaltende Säuren verwendet, die in nicht-silylierter Form einen pKa-Wert von maximal 2 aufweisen.

3. Verfahren gemäß Anspruch 1 und 2, dadurch gekennzeichnet, daß man als silylierte Säuren Trifluormethansulfonsäuretrimethylsilylester oder Alkylbenzolsulfonsäuretrimethylsilylester verwendet.

4. Gemäß Anspruch 1 bis 3 konditionierte Polyole.

5. Verwendung der gemäß Anspruch 1 bis 3 konditionierten Polyole als Ausgangsmaterial bei der Herstellung von Polyurethankunststoffen nach dem Isocyanat-Polyadditionsverfahren.

6. Verwendung gemäß Anspruch 5 zur Herstellung von Polyurethanschaumstoffen.

## Claims

1. A method for the conditioning and stabilisation of polyols, characterised in that polyols, before the reaction with isocyanates, are mixed at 0°C to 150°C with 0.0001 to 1 wt.%, based on the amount of polyol, of a silylated acid corresponding to the formula
X-[Si(CH₃)₃]ₙ
wherein
X represents the neutral acidic group which is obtained by removing the acidic hydrogen atoms from an n-basic acid having a maximum pKa value of 3, with the exception of hydrogen halide acids, and
n is an integer from 1 to 3.

2. A method according to claim 1, characterised in that O-silylated, oxygen-containing acids which have a maximum pKa value of 2 in the non-silylated form are used as the silylated acids corresponding to the formula given in claim 1.

3. A method according to claims 1 and 2, characterised in that the trimethylsilyl ester of trifluoromethanesulphonic acid or trimethylsilyl esters of alkylbenzenesulphonic acids are used as the silylated acids.

4. Polyols conditioned according to claims 1 to 3.

5. The use of the polyols conditioned according to claims 1 to 3 as starting materials in the production of polyurethane plastics by the isocyanate polyaddition process.

6. The use according to claim 5 for the production of polyurethane foams.

## Revendications

1. Procédé pour le conditionnement et la stabilisation de polyols, caractérisé en ce qu'on mélange des polyols, avant leur mise en réaction avec des isocyanates, à une température de 0 à 150°C, avec, à concurrence de 0,0001 % à 1 % en poids rapporté à la quantité du polyol, un acide silylé répondant à la formule
X-[Si(CH₃)₃]ₙ
dans laquelle
X représente le résidu acide neutre tel qu'on l'obtient par élimination des atomes d'hydrogène acides à partir d'un acide n-basique dont la valeur pKa maximale est égale à 3, des acides halogénhydriques étant exclus, et
n représente un nombre entier de 1 à 3.

2. Procédé selon la revendication 1, caractérisé en ce qu'on utilise comme acides silylés répondant à la formule indiquée à la revendication 1, des acides O-silylés contenant de l'oxygène qui, sous la forme non silylée, présentent une valeur pKa maximale égale à 2.

3. Procédé selon les revendications 1 et 2, caractérisé en ce qu'on utilise comme acides silylés, l'ester triméthylsilylique de l'acide trifluorométhanesulfonique ou l'ester triméthylsilylique d'acides alkylbenzènesulfoniques.

4. Polyols conditionnés conformément aux revendications 1 à 3.

5. Utilisation des polyols conditionnés conformément aux revendications 1 à 3, comme matières de départ lors de la préparation de matières synthétiques en polyuréthanne conformément au procédé de polyaddition d'isocyanates.

6. Utilisation selon la revendication 5, pour la préparation de mousses de polyuréthanne.
